# EUROPEAN PATENT SPECIFICATION

(11) **EP 4 354 843 B1**
(45) Date of publication and mention of the grant of the patent: **06.08.2025**
(21) Application number: 23199928.5
(22) Date of filing: 27.09.2023
(51) Int. Cl.: H04N 1/60

(54) **METHOD FOR CORRECTING IMAGE DENSITY, DEVICE FOR FORMING IMAGE, CONTROL DEVICE, AND MEDIUM**
VERFAHREN ZUR KORREKTUR DER BILDDICHTE, VORRICHTUNG ZUR BILDERZEUGUNG, STEUERUNGSVORRICHTUNG UND MEDIUM
PROCÉDÉ DE CORRECTION DE DENSITÉ D'IMAGE, DISPOSITIF DE FORMATION D'IMAGE, DISPOSITIF DE COMMANDE ET SUPPORT

(30) Priority: 11.10.2022 CN 202211244148
(43) Date of publication of application: 17.04.2024
(73) Proprietor: Zhuhai Pantum Electronics Co., Ltd., Zhuhai, Guangdong (CN)
(72) Inventor: SUN, Yan, Zhuhai, Guangdong (CN); MA, Yangxiao, Zhuhai, Guangdong (CN)
(74) Representative: Sun, Yiming

(56) References cited:
- EP-A2- 2 731 324
- US-A- 6 048 117

## Description

### TECHNICAL FIELD

The present disclosure relates to the field of image forming, and in particular, to a method for correcting image density, an image forming device, a control device, a system, and a storage medium.

### BACKGROUND

An image forming device is a device that forms an image on a recording medium through imaging principles, such as a printer, a copier, a fax machine, a multifunctional image making and copying device, an electrostatic printing device, and any other similar devices. In order to perform an image forming operation by using the image forming device, a control device is generally adopted to convert print data into a printer language and send the printer language to the image forming device.

According to types of printer languages, devices for forming image may include Page Description Language (PDL) devices and Graphics Device Interface (GDI) devices. Among them, PDL includes, for example, Printer Control Language (PCL) 5, PCL 6 and PostScript (PS), which refers to a printer language used for generating different commands based on objects. Since PDL generates commands for objects, PDL is advantageous when the page output data is small, such as only one word or one line. When the page output data is large, the output speed may be reduced. GDI language refers to a printer language used for converting one page of print data into binary print data, the binary print data is bitmap data. Since the GDI language generates binary print data as bitmap data in page units, compared with the situation when the output data is smaller, the GDI language is more beneficial for increasing the output speed when the output data is larger.

Image density can reflect the shade of imaging. During the image forming process, the image density may be influenced by various factors. For example, the image density of imaging may be influenced by changes of the environment such as temperature or humidity, changes of consumables over time, and changes of voltage. Therefore, image density correction is required during the image forming process. For GDI devices, the method for correcting image density in the prior art includes: the image forming device collects image density data through a sensor and sends the image density data to the control device, the control device generates a tone reproduction curve (TRC) based on the image density data. During the image formation process, the control device can perform image density correction based on TRC data.

However, the process of collecting image density data through sensors and generating TRC based on the image density data costs a large amount of time, and it is not easy for a user to determine the time when the image density correcting procedure is triggered (for example, when the set time is reached, or when the set quantity of image forming jobs is reached, and the image density correcting procedure is automatically triggered). If the user wishes to perform an image forming job but the image density correcting procedure is triggered during that period, the control device needs to perform the image forming job after the image density correcting is completed. As a result, the image forming efficiency is low, and the waiting time for the user is long, thereby affecting the user experience.

US6048117 discloses a network-based system for color calibration of printers.

### SUMMARY

In view of this, the present disclosure provides a method for correcting image density, an image forming device, a control device and a system to facilitate solving the problems in the prior art that the user wishes that the image density correcting procedure is triggered when performing the image forming job, the control device needs to perform the image forming job after the image density correcting is completed, thereby resulting in low the image forming efficiency is and long waiting time for the user, and affecting the user experience.

In a first aspect, an embodiment of the present disclosure provides a method for correcting image density of an image forming device, which is applied to the image forming device. The method includes the following steps: forming, in response to an image density correcting instruction triggered by a user, an image density pattern for image density correction; collecting image density data corresponding to the image density pattern; generating tone reproduction curve (TRC) data according to the image density data corresponding to the image density pattern; and sending the TRC data to a control device, wherein the control device is configured to correct image density based on the TRC data during the image forming process.

In an embodiment, said sending the TRC data to the control device includes the following step.

When the device for forming image establishes a communication connection with the control device, the TRC data is sent to the control device.

In an embodiment, said sending the TRC data to the control device includes the following step: sending, when the device for forming image established a communication connection with the control device, the TRC data to the control device.

In an embodiment, said sending the TRC data to the control device includes the following steps: receiving a TRC data acquisition instruction sent by the control device, wherein the TRC data acquisition instruction is configured to instruct the device for forming image to send the TRC data to the control device; and sending the TRC data to the control device.

In an embodiment, said sending the TRC data to the control device includes the following step: sending the TRC data to at least two control devices, respectively.

In an embodiment, the image density pattern includes: yellow Y image density pattern, magenta M image density pattern, cyan C image density pattern and black K image density pattern.

In an embodiment, the method further includes the following step: outputting image density correcting prompt information, wherein the image density correcting prompt information is configured to prompt the user to trigger the image density correcting instruction.

In a second aspect, an embodiment of the present disclosure provides a method for correcting image density, which is applied to a control device. The method includes the following steps: receiving TRC data sent by a device for forming image; and correcting the image density based on the TRC data during the image forming process.

In an embodiment, said receiving the TRC data sent by the device for forming image includes the following step: receiving, when the control device establishes a communication connection with the device for forming image, the TRC data sent by the device for forming image.

In an embodiment, said receiving the TRC data sent by the device for forming image includes the following steps: sending a TRC data acquisition instruction to the device for forming image, wherein the TRC data acquisition instruction is configured to instruct the device for forming image to send the TRC data to the control device; and receiving the TRC data sent by the device for forming image.

In a third aspect, an embodiment of the present disclosure provides a device for forming image, including: an image forming unit, an image density data collection unit, a TRC data generating unit, and a sending unit. The image forming unit is configured to form an image density pattern for image density correcting. The image density data collection unit is configured to collect image density data corresponding to the image density pattern. The TRC data generating unit is configured to generate TRC data according to the image density data corresponding to the image density pattern. The sending unit is configured to send the TRC data to a control device. The control device is configured to correct image density based on the TRC data during the image forming process.

In a fourth aspect, an embodiment of the present disclosure provides a control device, including: a receiving unit and an image density correcting unit. The receiving unit is configured to receive TRC data sent by a device for forming image. The image density correcting unit is configured to correct image density based on the TRC data during the image forming process.

In a fifth aspect, an embodiment of the present disclosure provides an image forming system, including the device for forming image according to the third aspect and the control device according to the fourth aspect. The device for forming image and the control device are communication-connected.

According to the present disclosure, the user controls the image forming device to generate TRC data in advance and sends the TRC data to the control device. During the image forming process, the control device can directly correct the image density using the TRC data to improve the image forming efficiency and the user experience.

### BRIEF DESCRIPTION OF DRAWINGS

In order to better illustrate the technical solutions of embodiments of the present disclosure, the drawings to be used in the embodiments will be briefly introduced below. It is appreciated that the drawings described below are merely some embodiments of the present disclosure. For one skilled in the art, other drawings can be obtained based on these drawings without any creative effort.
FIG. 1 is a schematic diagram showing an application scenario according to an embodiment of the present disclosure.
FIG. 2 is a schematic diagram showing another application scenario according to an embodiment of the present disclosure.
FIG. 3 is a schematic diagram showing still another application scenario according to an embodiment of the present disclosure.
FIG. 4 is a schematic flow chart showing a method for correcting image density for a GDI type device according to an embodiment of the present disclosure.
FIG. 5 is a schematic diagram of an image density correcting image according to an embodiment of the present disclosure.
FIG. 6 is a TRC schematic diagram according to an embodiment of the present disclosure.
FIG. 7 is a schematic diagram of another image density correcting image according to an embodiment of the present disclosure.
FIG. 8 is a schematic structural diagram of a GDI type device according to an embodiment of the present disclosure.
FIG. 9 is a schematic structural diagram of a control device according to an embodiment of the present disclosure.
FIG. 10 is a schematic structural diagram of a device for forming color images according to an embodiment of the present disclosure.

### DESCRIPTION OF EMBODIMENTS

In order to better understand the technical solutions of the present disclosure, the embodiments of the present disclosure will be further described in detail below with reference to the drawings.

It should be explicitly understood that the embodiments described herein are used just to explain the present disclosure, but not to limit the present disclosure. Based on the embodiments of the present disclosure, all other embodiments obtained by one skilled in the art without any creative effort shall fall within the protection scope of the present disclosure.

The terminology used in the embodiment of the present disclosure is merely for the purpose of describing particular embodiments, and is not intended to limit the present disclosure. As used in the embodiments of the present disclosure and the appended claims, the singular forms "a/an", "the" and "said" are intended to include the plural forms as well, unless the context explicitly indicated otherwise.

It should be understood that the term "and/or" used in the specification is merely an association relationship describing related objects, which indicates that three types of relationship may exist. For example, "A and/or B" may indicate three situations: A exists alone, A and B exist simultaneously, and B exists alone. In addition, the character "/" in the specification generally indicates that the former and latter related objects are in an "or" relationship.

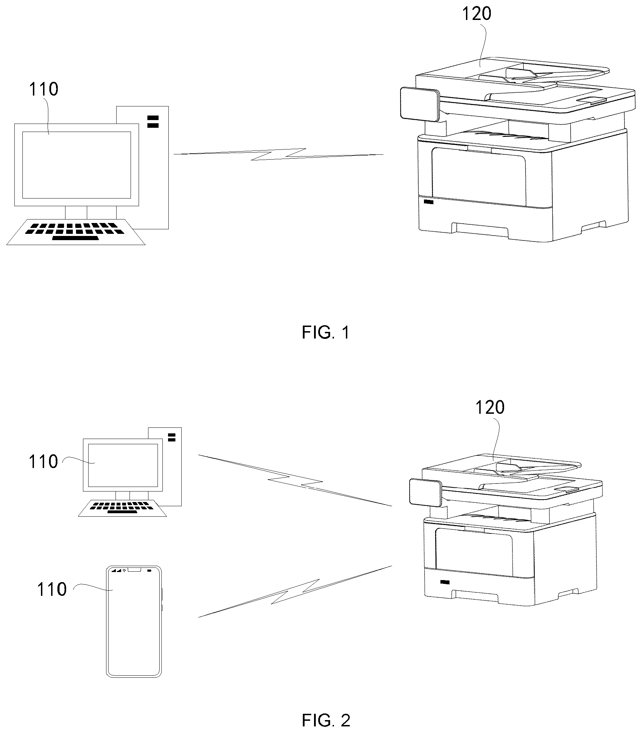

FIG. 1 is a schematic diagram showing an application scenario according to an embodiment of the present disclosure. As shown in FIG. 1, the application scenario includes: a control device 110 and an image forming device 120. The control device 110 and the image forming device 120 are interconnected through a wired or wireless communication network to transmit information. During the image forming process, the control device 110 converts print data into the printer language and sends the printer language to the image forming device 120, and the image forming device performs the image forming operation.

The communication network between the control device 110 and the image forming device 120 may be a local area network or a wide area network transferred through a relay device. When the communication network is a local area network, for example, the communication network may be a short-range communication network, such as a WiFi hotspot network, a WiFi P2P network, a Bluetooth network, a zigbee network, or a near field communication (NFC) network. When the communication network is a wide area network, for example, the communication network may be a third-generation wireless telephone technology (3G) network, a fourth generation mobile communication technology (4G) network, a fifth-generation mobile communication technology (5G) network, a future evolved public land mobile network (PLMN) or the Internet, etc.

It should be noted that FIG. 1 is merely an exemplary description and should not be used to limit the scope of the present disclosure. For example, the image forming device 120 includes, but is not limited to, a printer, a copier, a fax machine, a multifunctional image making and copying device, an electrostatic printing device, and any other similar device. The control device 110 includes, but is not limited to, a computer, a mobile phone, a tablet computer, an internal enterprise server, a cloud server and any other electronic device that can communicate with the image forming device 120. In some embodiments, the control device 110 may also be called an upper computer, a host computer, etc.

In an embodiment, two or more control devices 110 may be provided, and the two or more control devices 110 are interconnected with the image forming device 120, respectively, through a wired or wireless communication network. In addition, the two or more control devices 110 may be control devices 110 of the same type or of different types, which is not limited in embodiments of the present disclosure. For example, in the application scenario shown in FIG. 2, two control devices 110 are provided, and the two control devices 110 are connected to the image forming device 120, respectively, through a wired or wireless communication network.

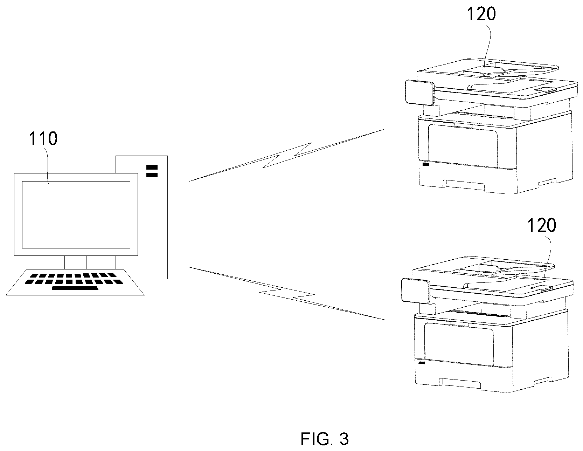

In an embodiment, two or more devices 120 for forming image may be provided, and the two or more devices 120 for forming image are interconnected with the control device 110, respectively, through a wired or wireless communication network. In addition, the two or more devices 120 for forming image may be devices 120 for forming image of the same type or of different types, which is not limited in embodiments of the present disclosure. For example, in the application scenario shown in FIG. 3, two devices 120 for forming image are provided, and the two devices 120 for forming image are connected to the control device 110, respectively, through a wired or wireless communication network.

According to types of printer languages, devices for forming image may include Page Description Language (PDL) devices and Graphics Device Interface (GDI) devices. Among them, PDL includes, for example, Printer Control Language (PCL) 5, PCL 6 and PostScript (PS), which refers to a printer language used for generating different commands based on objects. Since PDL generates commands for objects, PDL is advantageous when the page output data is small, such as only one word or one line. When the page output data is large, the output speed may be reduced. GDI language refers to a printer language used for converting one page of print data into binary print data, the binary print data is bitmap data. Since the GDI language generates binary print data as bitmap data in page units, compared with the situation when the output data is smaller, the GDI language is more beneficial for increasing the output speed when the output data is larger.

Image density can reflect the shade of imaging. During the image forming process, the image density may be influenced by various factors. For example, the image density of imaging may be influenced by changes of the environment such as temperature or humidity, changes of consumables over time, and changes of voltage. Therefore, image density correction is required during the image forming process. For GDI devices, the method for correcting image density in the prior art includes: the image forming device collects image density data through a sensor and sends the image density data to the control device, the control device generates a tone reproduction curve (TRC) based on the image density data. During the image formation process, the control device can perform image density correction based on TRC data.

However, the process of collecting image density data through sensors and generating TRC based on the image density data costs a large amount of time, and it is not easy for a user to determine the time when the image density correcting procedure is triggered (for example, when the set time is reached, or when the set quantity of image forming jobs is reached, and the image density correcting procedure is automatically triggered). If the user wishes to perform an image forming job but the image density correcting procedure is triggered during that period, the control device needs to perform the image forming job after the image density correcting is completed. As a result, the image forming efficiency is low, and the waiting time for the user is long, thereby affecting the user experience.

In view of the above technical problems, an embodiment of the present disclosure provides a method for correcting image density of a GDI device. The user controls the image forming device to generate TRC data in advance and sends the TRC data to the control device. During the forming process, the control device can directly correct the image density correction using the TRC data, improve image forming efficiency, and thus improve user experience. A detailed description will be given below with reference to the accompanying drawings

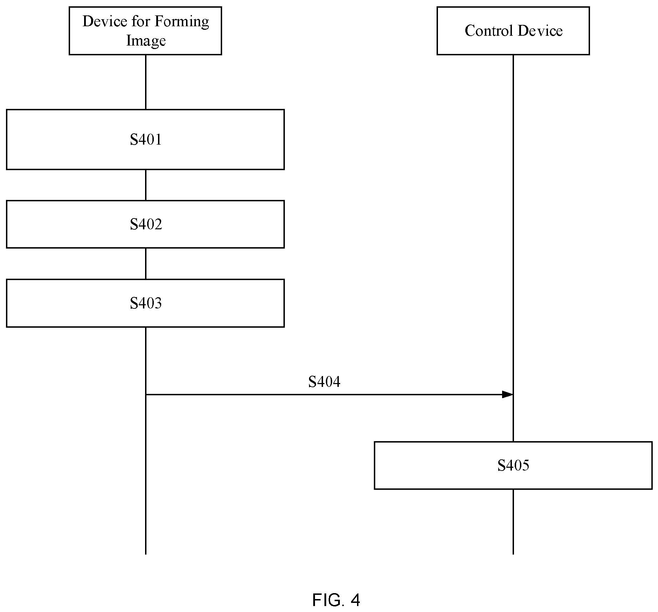

FIG. 4 is a schematic flow chart of a method for correcting image density of a GDI type of image forming device according to an embodiment of the present disclosure. This method can be applied to the application scenarios shown in FIGs. 1-3, and mainly includes the following steps, as shown in FIG. 4.

Step S401: In response to an image density correcting instruction triggered by the user, the image forming device forms an image density pattern for image density correction.

It should be noted that the image forming device involved in this embodiment refers to a GDI type of image forming device. For the GDI device, during the image forming process, the image density needs to be corrected by the image forming device based on TRC data. In other words, the control device is the device that ultimately uses the TRC data.

In an embodiment, the user can trigger the image density correcting instruction through the UI interface or physical buttons of the device when the device is in an idle state. After receiving the image density correcting instruction, the image forming device can print an image density correcting image. The image density correcting image includes the image density pattern used for image density correcting. The image density can be divided into multiple levels between 0% and 100%, and the printed image density correcting image includes the image density pattern of multiple image density levels, such that image density data of multiple level of image density can be collected in subsequent steps.

In an embodiment, the user cannot determine the timing of triggering the image density correcting instruction. As a result, since the user probably fails to trigger the image density correcting instruction in time, the image formation quality is poor, or the user waits too long for the image forming job, thereby affecting the user experience. For example, when the image density correcting process can only be triggered by the user, if the user fails to complete the image density correcting prior to the image forming job, the image forming quality will be adversely affected. For another example, when the image density correcting process can be triggered by the user or automatically initiated by the image forming device, if the user fails to complete the image density correcting prior to the image forming job, the image density correcting process will be triggered when performing the image forming job. In this case, the control device needs to perform the image forming job after the image density correcting is completed, thereby resulting in low image forming efficiency and long user waiting time.

Regarding the above problems, in an embodiment of the present disclosure, image density correcting prompt information is outputted on the image forming device. The image density correcting prompt information is used to prompt the user to trigger the image density correcting instruction, such that the user can complete the image density correcting in time. For example, the image forming device can output the image density correcting prompt information in idle time, such that the user can trigger the image density correcting instruction in the idle time of the image forming device, such that the image forming device can use the idle time to complete the image density correcting. For example, the image density correcting prompt information is output on the image forming device. When checking the consumables of the image forming device, or turning on the image forming device (it can be understood that the image forming device is not performing the image forming job at this moment, and thus, is in an idle state), the user notices the image density correcting prompt information, and thereby triggers the image density correcting instruction, such that the image forming device will first complete image density correcting.

In an embodiment, the image forming device can determine whether to output image density correcting prompt information based on the quantity of the image forming jobs and/or the time since the last image density correcting. For example, setting an image forming job quantity threshold, when the image forming device determines that the current image forming job quantity is greater than or equal to the image forming job quantity threshold, the image density correcting prompt information is output. It can be understood that after completing the image density correcting, the quantity of the image forming jobs should be reset, and then counted again. Additionally or alternatively, setting an image density correcting time interval, when the image forming device determines that the time interval from the current time to the last image density correcting is greater than or equal to the image density correcting time interval, the image density correcting prompt information is outputted.

It should be noted that the image density correcting prompt information according to an embodiment of the present disclosure may be information displayed on a display screen, voice information, lighting information, etc., and is not limited in the embodiments of the present disclosure. In addition, the image density correcting prompt information can also be output on the control device. The description of the above embodiments can be referred to for details. For the sake of simplicity, the details are not repeated herein.

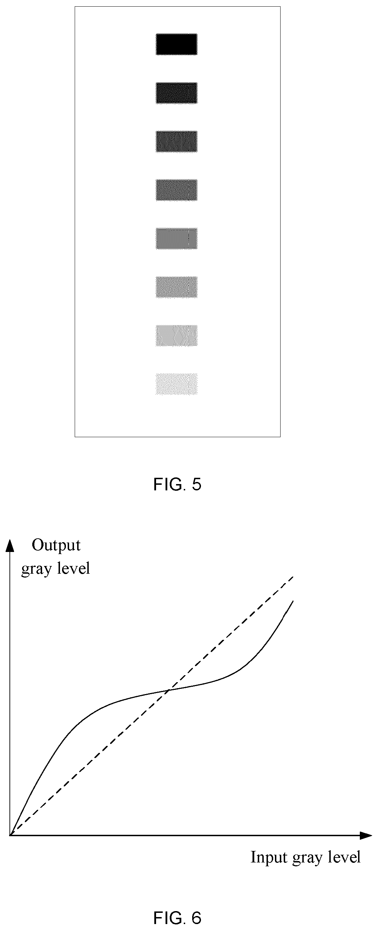

FIG. 5 is a schematic diagram of an image density correcting image according to an embodiment of the present disclosure. As shown in FIG. 5, in an embodiment of the present disclosure, the image density is divided into 8 levels between 0% and 100%, and the printed image density correcting image includes 8 image density patterns. The image density levels of the 8 image density patterns change gradually. Correspondingly, the image density data of the 8 image density levels can be collected in subsequent steps. For example, those skilled in the art can divide the image density into more (for example, 10, 12, 15, etc.) levels or fewer (for example, 4, 6, 7, etc.) levels between 0% and 100% according to actual needs, and this is not limited in the embodiments of the present disclosure.

Step S402: The image forming device collects image density data corresponding to the image density pattern.

In an embodiment, the image forming device is provided with an image density data collection unit (for example, a sensor). After the image density pattern is formed, the sensor can automatically collect image density data corresponding to the image density pattern. It can be understood that when the image density correcting image includes image density patterns with multiple image density levels, the image density data corresponding to each of the image density patterns is collected. For example, as shown in FIG. 5, image density data of 8 image density levels are collected, respectively.

Step S403: The image forming device generates the TRC data according to the image density data corresponding to the image density pattern.

In an embodiment of the present disclosure, the TRC is a curve indicating the relationship between the input gray level and the output gray level. The input gray level is a gray level corresponding to the image density of the image density pattern that is expected to be formed, and the output gray level is a gray level corresponding to the image density data collected based on the formed image density pattern.

FIG. 6 is a schematic diagram showing TRC according to an embodiment of the present disclosure. It can be understood that when the input gray level is the same with the output gray level, it means that there is no deviation in the image density, which is an ideal state. Correspondingly, the TRC is shown as the dashed line in FIG. 6 (a straight line with a slope of 45°). However, in most situations, there are many influencing factors of image density in the image forming process. For example, changes in the environment such as temperature or humidity, changes of consumables over time, and changes of voltage may affect the image density of imaging, resulting in that the input gray level is different from the output gray level. Correspondingly, the TRC is shown by the solid line in FIG. 6.

It should be noted that the TRC data according to an embodiment of the present disclosure has a specific file format type. For example, the TRC data is a file with the suffix ".trc". Files in this format can be used directly by the print driver of the control device without editing again.

Step S404: The image forming device sends the TRC data to the control device.

In an embodiment of the present disclosure, after the device for forming an image generates a TRC, the TRC data can be sent to the control device at an appropriate timing, such that the control device can correct the image density based on the TRC data during the image forming process.

According to the invention, the image forming device determines whether to establish a communication connection with the control device. If the image forming device establishes a communication connection with the control device, the TRC data is sent to the control device, and if the image forming device does not establish a communication connection with the control device, the TRC data is locally saved, and after the image forming device establishes a communication connection with the control device, the TRC data is sent to the control device.

According to the invention, the TRC data in the image forming device may be updated regularly. For example, the user triggers an image density correcting instruction every once in a while to update the TRC data. It can be understood that if the image forming device maintains communicatively connected with the control device, the TRC data will be sent to the control device once the image forming device obtains the TRC data. In this case, the control device can always obtain the latest TRC data, which facilitates the control device to correct the image density based on the latest TRC data. This implementation is especially suitable for the control devices that are used frequently.

However, in some embodiments, the control device may be in an idle state for a long time. At this time, if the image forming device frequently sends updated TRC data to the control device, there may be redundant information interaction between the image forming device and the control device, which wastes performance overhead of the system. For example, at a first time t1, the image forming device generates the first TRC data, and then sends the first TRC data to the control device. At the second time t2, the image forming device generates the second TRC data, and then sends second first TRC data to the control device. However, during the time period t1-t2, the control device is not used. Therefore, the first TRC data is not utilized, thereby resulting in redundant information interaction between the image forming device and the control device.

Regarding the above deficiencies, an embodiment of the present disclosure also provides another implementation manner, in which the image forming device sends TRC data to the control device based on the request of the control device. For example, the control device can send a TRC data acquisition instruction to the control device before performing the image forming job. The TRC data acquisition instruction is configured to instruct the device for image forming to send the TRC data to the control device. Correspondingly, after receiving the TRC data acquisition instruction, the image forming device sends TRC data to the control device. For example, when the control device needs to perform an image forming job, it sends a TRC data acquisition instruction to the image forming device to obtain the latest TRC data. It can be understood that this implementation method is especially suitable for control devices that are used less frequently.

Step S405: The control device corrects the image density according to the TRC data during the image forming process.

In an embodiment, after the control device obtains the TRC data, the image density can be corrected based on the TRC data during the image forming process. The specific process of correcting the image density can be implemented in the prior art, and will not be described in details again in embodiments of the present disclosure.

In an embodiment of the present disclosure, the user controls the device for image forming to generate TRC data in advance and sends the TRC data to the control device. During the image forming process, the control device can directly use the TRC data to correct the image density, thereby improving the image forming efficiency and the user experience.

In an embodiment, the image forming device may be connected to at least two control devices at the same time. After the image density correcting instruction is triggered, the image forming device sends the TRC data to the at least two control devices, respectively. For example, as shown in FIG. 2, the image forming device may be connected to two control devices at the same time. After the image density correcting instruction is triggered, the image forming device sends TRC data to the two control devices, respectively.

In an embodiment, the control device may be connected to at least two devices for forming image at the same time. After the user triggers the image density correcting instruction in any one of the devices for forming image, this image forming device sends TRC data to the control device. For example, as shown in FIG. 3, the control device is connected to two devices for forming image at the same time. For the sake of better explanation, the two devices for forming image are denoted as a first image forming device and a second image forming device, respectively. When the user triggers the image density correcting instruction in the first device, the first device sends the TRC data to the control device. When the user triggers the image density correcting instruction in the second device, the second device sends the TRC data to control device.

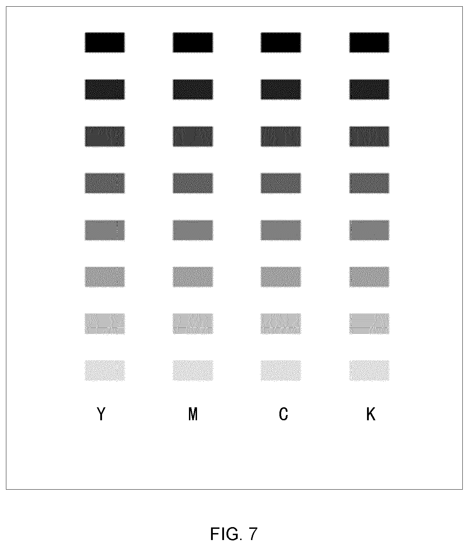

In an embodiment, the image forming device is a device for forming color image. This device for forming color image can be used to form color images using toners of four colors: yellow Y, magenta M, cyan C and black K. Correspondingly, the image density pattern formed in the above step S401 should include: a yellow Y image density pattern, a magenta M image density pattern, a cyan C image density pattern and a black K image density pattern, as shown in FIG. 7.

In other words, the method for correcting image density according to the present disclosure can be applied to both devices for forming monochrome image and devices for forming color image.

Correspondingly to the above embodiments, an embodiment of the present disclosure further provides a GDI type of image forming device.

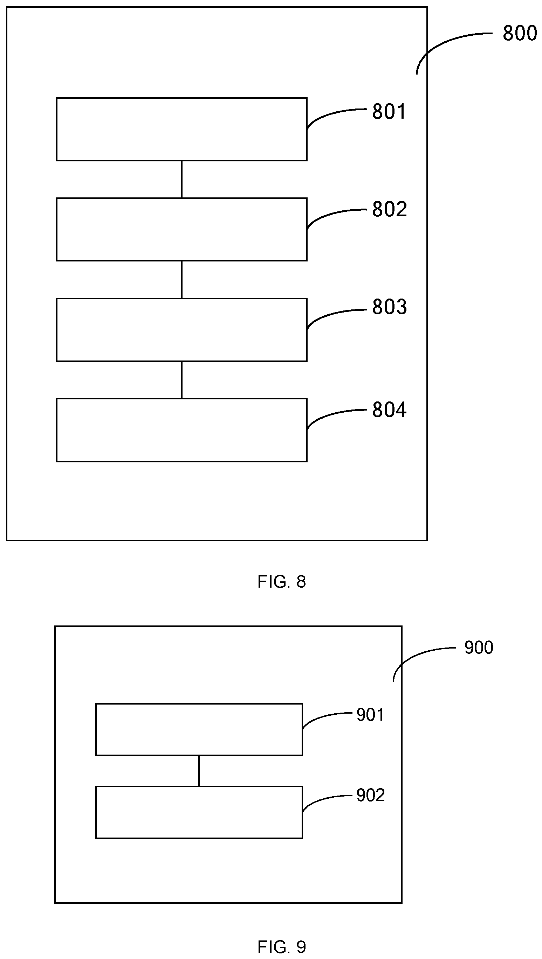

FIG. 8 is a schematic structural diagram of a GDI type of image forming device according to an embodiment of the present disclosure. As shown in FIG. 8, the GDI device 800 includes: an image forming unit 801 configured to form an image density pattern for image density correction, an image density data collection unit configured to collect image density data corresponding to the image density pattern, a TRC data generating unit 802 configured to generate TRC data according to image density data corresponding to the image density pattern, a sending unit 803 configured to send the TRC data to a control device. The control device is configured to correct the image density based on the TRC data during the image forming process.

The specific content of this embodiment of the present disclosure can be referred to the description of the above method embodiments, and will not be described in details again herein for the sake of conciseness.

Corresponding to the above embodiments, an embodiment of the present disclosure further provides a control device.

FIG. 9 is a schematic structural diagram of a control device according to an embodiment of the present disclosure. As shown in the FIG. 9, the control device 900 includes: a receiving unit 901 configured to receive the TRC data sent by the image forming device, and an image density correcting unit 902 configured to correct the image density according to the TRC data during the image forming process.

Corresponding to the above embodiments, an embodiment of the present disclosure further provides an image forming system. The image forming system includes a GDI type of image forming device shown in FIG. 8 and a control device shown in FIG. 9. The GDI type of image forming device is in communication with the control device.

In order to facilitate understanding, the working principle of the image forming device will be described in detail below in conjunction with the specific structure of a color device for forming color image.

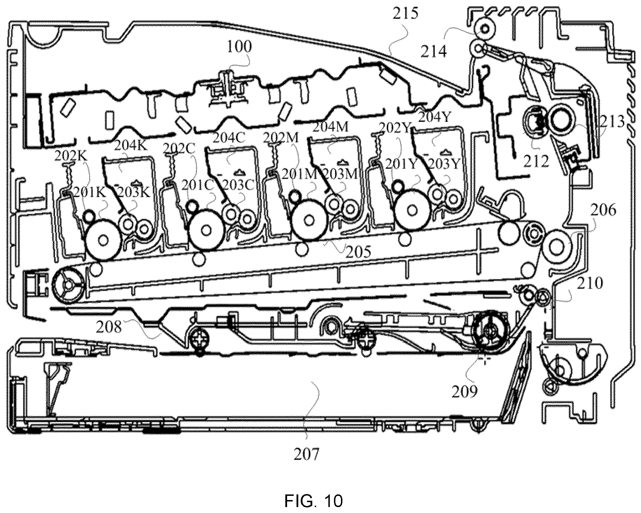

FIG. 10 is a schematic structural diagram of a device for forming color images according to an embodiment of the present disclosure. As shown in FIG. 10, the device for forming color image includes: a photosensitive drum 201Y-K (Y, M, C, K), a charging roller 202Y-K, a developing roller 203Y-K, a powder bin 204Y-K, a transfer belt 205, a secondary transfer roller 206, a paper cartridge 207, a manual feed tray 208, a paper feed roller 209, a transport roller 210, an optical scanning device 100, a heat roller 212, a pressing roller 213, a discharge roller 214 and a paper discharge tray 215.

In the device for forming color image, one or four optical scanning units 100 may be provided. It can be understood that when one optical scanning unit 100 is provided, the optical scanning unit 100 can emit four beams. Four charging rollers 202Y-K are configured to charge surfaces of the four photosensitive drums 201Y-K, respectively. The four optical paths of the optical scanning unit 100 emit laser beams to form electrostatic latent images on the surfaces of the photosensitive drums 201Y-K, respectively. The four developing rollers 203Y-K are configured to develop a toner image of one color on the surfaces of the photosensitive drums 201Y-K, respectively. The color image forming equipment adopts a secondary transfer method, that is, the four photosensitive drums 201Y-K sequentially transfer the toner images onto the transfer belt 205, and then the color toner image formed on the transfer belt 205 is secondarily transferred onto the paper through the secondary transfer roller 206. The paper cartridge 207 is configured to store papers. The paper feed roller 209 is configured to transport the stored papers to the transport path. The transport roller 210 is configured to transport the papers to the secondary transfer roller 206.

The secondary transfer roller 206 transports the imaged paper to the clamping area of the heat roller 212 and the pressing roller 213. The heat roller 212 and the pressing roller 213 are configured to photographically fix the toner image on the paper. The heat roller 212 can use the ceramic heating method. The heat roller 212 and the pressing roller 213 transport the photographically fixed papers to the discharge roller 214, and the discharge roller 214 discharges the papers to the paper discharge tray 215 and stacks up the papers.

An embodiment of the present disclosure further provides a computer storage medium, which can store a program, and when executed, the program may include some or all of the steps in these embodiments according to the present disclosure. The storage medium may be a magnetic disk, an optical disk, a read-only memory (ROM) or a random access memory (RAM), etc.

An embodiment of the present disclosure further provides a computer program product. The computer program product includes executable instructions. When the executable instructions are executed on a computer, the computer is caused to execute some or all of the steps in the above method embodiments.

In the embodiments of the present disclosure, "at least one" refers to one or more, and "multiple/a plurality of" refers to two or more. "And/or" illustrates the relationship between associated objects, and indicates that three types of relationship may exist. For example, "A and/or B" may indicate three situations: A exists alone, A and B exist simultaneously, and B exists alone. In addition, the character "/" in the specification generally indicates that the former and latter related objects are in an "or" relationship. "At least one of the following" and similar expressions refer to any combination of these items, including any combination of single or plural items. For example, "at least one of a, b and c" may indicate: a, b, c, a-b, a-c, b-c, or a-b-c, where a, b, and c may be single or multiple.

It can be realized by one skilled in the art that each unit and each algorithm step described in these embodiments disclosed herein can be implemented by a combination of an electronic hardware, a computer software and an electronic hardware. Whether these functions are executed via a hardware or a software depends on the specific application and design constraints of the technical solution. One skilled in the art may implement the described functionality using different methods for each specific application, and such implementation should not be considered as going beyond the scope of the present disclosure.

It can be can clearly understood that by one skilled in the art that for the convenience and simplicity of illustration, the specific working processes of the systems, the devices and the units illustrated above can be referred to the corresponding processes in the foregoing method embodiments, and will not be described in details again herein.

In some embodiments according to the present disclosure, any function may be stored in a computer-readable storage medium, if it is implemented in a form of a software functional unit, and is sold or used as an independent product. Based on this understanding, the essence of the technical solution of the present disclosure, or the part that contributes to the prior art, or the part of the technical solution, can be embodied in the form of a software product. The computer software product is stored in a storage medium, including some instructions to enable a computer device (which may be a personal computer, a server, or a network device, etc.) to execute all or part of the steps of the method according to each embodiment of the present disclosure. The aforementioned storage media includes: a U disk, a mobile hard disk, a read-only memory (ROM), a random access memory (RAM), a magnetic disk or an optical disk, etc., which can store program codes.

The foregoing description are merely embodiments of the present disclosure. Any change or substitution that can be easily envisaged by one familiar with this technical field shall fall within the protection scope of the present disclosure. The protection scope of the present disclosure shall be subject to the protection scope of the appended claims.

## Claims

1. A method for correcting image density, applied to an image forming device (120), comprising:
forming, in response to an image density correcting instruction triggered by a user, an image density pattern for image density correction;
collecting image density data corresponding to the image density pattern;
generating tone reproduction curve (TRC) data according to the image density data corresponding to the image density pattern; and
sending the TRC data to a control device (900), wherein the control device (900) is configured to correct image density based on the TRC data during the image forming process; **characterized in that**
the step of sending the TRC data to the control device (900) includes:
determining, by the image forming device (120), whether to establish a communication connection with the control device (900); and
if the image forming device (120) establishes a communication connection with the control device (900), the TRC data are sent to the control device (900); and
if the image forming device (120) does not establish a communication connection with the control device (900), the TRC data are locally saved, and after the image forming device (120) establishes a communication connection with the control device (900), the TRC data are sent to the control device (900).

2. The method according to claim 1, wherein said sending the TRC data to the control device (900) comprises:
sending, when the image forming device (120) established a communication connection with the control device (900), the TRC data to the control device (900).

3. The method according to claim 1, wherein said sending the TRC data to the control device (900) comprises:
receiving a TRC data acquisition instruction sent by the control device (900), wherein the TRC data acquisition instruction is configured to instruct the image forming device (120) to send the TRC data to the control device (900); and
sending the TRC data to the control device (900).

4. The method according to claim 1, wherein said sending the TRC data to the control device (900) comprises:
sending the TRC data to at least two control devices (900), respectively.

5. The method according to claim 1, wherein the image density pattern comprises: a yellow Y image density pattern, a magenta M image density pattern, a cyan C image density pattern and a black K image density pattern.

6. The method according to claim 1, further comprising:
outputting image density correcting prompt information, wherein the image density correcting prompt information is configured to prompt the user to trigger the image density correcting instruction.

7. An image forming device (120), comprising:
at least one processor; and
a memory configured to store instructions executable by the at least one processor;
wherein the instructions cause the at least one processor to:
form an image density pattern for image density correction;
collect image density data corresponding to the image density pattern;
generate TRC data according to the image density data corresponding to the image density pattern;
send the TRC data to a control device (900), wherein the control device (900) is configured to correct image density based on the TRC data during the image forming process;
**characterized in that** the processor is configured to:
perform the step of sending the TRC data to the control device (900) including:
determining whether to establish a communication connection with the control device (900); and
if the image forming device (120) establishes a communication connection with the control device (900), the TRC data is sent to the control device (900); and
if the image forming device (120) does not establish a communication connection with the control device (900), the TRC data is locally saved, and after the image forming device (120) establishes a communication connection with the control device (900), the TRC data is sent to the control device (900).

8. The image forming device (120) according to claim 7, wherein the processor is further configured to:
send, when the image forming device (120) established a communication connection with the control device (900), the TRC data to the control device (900).

9. The image forming device (120) according to claim 7, wherein the processor is further configured to:
receive a TRC data acquisition instruction sent by the control device (900), wherein the TRC data acquisition instruction is configured to instruct the image forming device (120) to send the TRC data to the control device (900); and
send the TRC data to the control device (900).

10. The image forming device (120) according to claim 7, wherein the processor is further configured to:
send the TRC data to at least two control devices (900), respectively.

11. The image forming device (120) according to claim 7, wherein the image density pattern comprises: a yellow Y image density pattern, a magenta M image density pattern, a cyan C image density pattern and a black K image density pattern.

12. The image forming device (120) according to claim 7, wherein the processor is further configured to:
output image density correcting prompt information, wherein the image density correcting prompt information is configured to prompt the user to trigger the image density correcting instruction.

13. A non-transitory computer-readable storage medium, wherein the computer-readable storage medium stores computer program instructions thereon, the computer program instructions, when being executed by a processor, are configured to perform the method for correcting image density of any one of claims 1 to 6.

## Patentansprüche

1. Verfahren zur Korrektur der Bilddichte, angewendet auf eine Bilderzeugungsvorrichtung (120), umfassend:
Bilden eines Bilddichtemusters zur Bilddichtekorrektur als Reaktion auf eine durch einen Benutzer ausgelöste Bilddichtekorrekturanweisung;
Erfassen von Bilddichtedaten, die dem Bilddichtemuster entsprechen;
Erzeugen von Tonwertwiedergabekurven-Daten (TRC-Daten) gemäß den Bilddichtedaten, die dem Bilddichtemuster entsprechen; und
Senden der TRC-Daten an eine Steuervorrichtung (900), wobei die Steuervorrichtung (900) eingerichtet ist, die Bilddichte auf Grundlage der TRC-Daten während des Bilderzeugungsprozesses zu korrigieren; **dadurch gekennzeichnet, dass**
das Senden der TRC-Daten an die Steuervorrichtung (900) Folgendes umfasst:
Bestimmen, durch die Bilderzeugungsvorrichtung (120), ob eine Kommunikationsverbindung mit der Steuervorrichtung (900) hergestellt werden soll; und
wenn die Bilderzeugungsvorrichtung (120) eine Kommunikationsverbindung mit der Steuervorrichtung (900) herstellt, werden die TRC-Daten an die Steuervorrichtung (900) gesendet; und
wenn die Bilderzeugungsvorrichtung (120) keine Kommunikationsverbindung mit der Steuervorrichtung (900) herstellt, werden die TRC-Daten lokal gespeichert, und nachdem die Bilderzeugungsvorrichtung (120) eine Kommunikationsverbindung mit der Steuervorrichtung (900) hergestellt hat, werden die TRC-Daten an die Steuervorrichtung (900) gesendet.

2. Verfahren nach Anspruch 1, wobei das Senden der TRC-Daten an die Steuervorrichtung (900) Folgendes umfasst:
Senden der TRC-Daten an die Steuervorrichtung (900), wenn die Bilderzeugungsvorrichtung (120) eine Kommunikationsverbindung mit der Steuervorrichtung (900) hergestellt hat.

3. Verfahren nach Anspruch 1, wobei das Senden der TRC-Daten an die Steuervorrichtung (900) Folgendes umfasst:
Empfangen einer TRC-Datenabrufanweisung, die von der Steuervorrichtung (900) gesendet wird, wobei die TRC-Datenabrufanweisung dazu eingerichtet ist, die Bilderzeugungsvorrichtung (120) anzuweisen, die TRC-Daten an die Steuervorrichtung (900) zu senden; und
Senden der TRC-Daten an die Steuervorrichtung (900).

4. Verfahren nach Anspruch 1, wobei das Senden der TRC-Daten an die Steuervorrichtung (900) Folgendes umfasst:
Senden der TRC-Daten jeweils an mindestens zwei Steuervorrichtungen (900).

5. Verfahren nach Anspruch 1, wobei das Bilddichtemuster Folgendes umfasst: ein gelbes Y-Bilddichtemuster, ein magentafarbenes M-Bilddichtemuster, ein cyanfarbenes C-Bilddichtemuster und ein schwarzes K-Bilddichtemuster.

6. Verfahren nach Anspruch 1, ferner umfassend:
Ausgeben einer Bilddichtekorrekturhinweisinformation, wobei die Bilddichtekorrekturhinweisinformation dazu eingerichtet ist, den Benutzer aufzufordern, die Bilddichtekorrekturanweisung auszulösen.

7. Bilderzeugungsvorrichtung (120), umfassend:
mindestens einen Prozessor; und
einen Speicher, der dazu eingerichtet ist, Anweisungen zu speichern, die durch den mindestens einen Prozessor ausführbar sind;
wobei die Anweisungen den mindestens einen Prozessor veranlassen:
ein Bilddichtemuster zur Bilddichtekorrektur zu bilden;
Bilddichtedaten zu erfassen, die dem Bilddichtemuster entsprechen;
TRC-Daten gemäß den Bilddichtedaten, die dem Bilddichtemuster entsprechen, zu erzeugen;
die TRC-Daten an eine Steuervorrichtung (900) zu senden, wobei die Steuervorrichtung (900) dazu eingerichtet ist, die Bilddichte auf Grundlage der TRC-Daten während des Bilderzeugungsprozesses zu korrigieren;
**dadurch gekennzeichnet, dass** der Prozessor eingerichtet ist, um:
den Schritt des Sendens der TRC-Daten an die Steuervorrichtung (900) auszuführen, wobei dieser Schritt Folgendes umfasst:
Bestimmen, ob eine Kommunikationsverbindung mit der Steuervorrichtung (900) hergestellt werden soll; und
wenn die Bilderzeugungsvorrichtung (120) eine Kommunikationsverbindung mit der Steuervorrichtung (900) herstellt, werden die TRC-Daten an die Steuervorrichtung (900) gesendet; und
wenn die Bilderzeugungsvorrichtung (120) keine Kommunikationsverbindung mit der Steuervorrichtung (900) herstellt, werden die TRC-Daten lokal gespeichert, und nachdem die Bilderzeugungsvorrichtung (120) eine Kommunikationsverbindung mit der Steuervorrichtung (900) hergestellt hat, werden die TRC-Daten an die Steuervorrichtung (900) gesendet.

8. Bilderzeugungsvorrichtung (120) nach Anspruch 7, wobei der Prozessor ferner eingerichtet ist, um:
die TRC-Daten an die Steuervorrichtung (900) zu senden, wenn die Bilderzeugungsvorrichtung (120) eine Kommunikationsverbindung mit der Steuervorrichtung (900) hergestellt hat.

9. Bilderzeugungsvorrichtung (120) nach Anspruch 7, wobei der Prozessor ferner eingerichtet ist, um:
eine von der Steuervorrichtung (900) gesendete TRC-Datenabrufanweisung zu empfangen, wobei die TRC-Datenabrufanweisung dazu eingerichtet ist, die Bilderzeugungsvorrichtung (120) anzuweisen, die TRC-Daten an die Steuervorrichtung (900) zu senden; und
die TRC-Daten an die Steuervorrichtung (900) zu senden.

10. Bilderzeugungsvorrichtung (120) nach Anspruch 7, wobei der Prozessor ferner eingerichtet ist, um:
die TRC-Daten jeweils an mindestens zwei Steuervorrichtungen (900) zu senden.

11. Bilderzeugungsvorrichtung (120) nach Anspruch 7, wobei das Bilddichtemuster Folgendes umfasst: ein gelbes Y-Bilddichtemuster, ein magentafarbenes M-Bilddichtemuster, ein cyanfarbenes C-Bilddichtemuster und ein schwarzes K-Bilddichtemuster.

12. Bilderzeugungsvorrichtung (120) nach Anspruch 7, wobei der Prozessor ferner eingerichtet ist, um:
eine Bilddichtekorrekturhinweisinformation auszugeben, wobei die Bilddichtekorrekturhinweisinformation dazu eingerichtet ist, den Benutzer aufzufordern, die Bilddichtekorrekturanweisung auszulösen.

13. Nichtflüchtiges, computerlesbares Speichermedium, wobei das computerlesbare Speichermedium darauf gespeicherte Computerprogramm-Anweisungen enthält, wobei die Computerprogramm-Anweisungen, wenn sie von einem Prozessor ausgeführt werden, dazu eingerichtet sind, das Verfahren zur Korrektur der Bilddichte gemäß einem der Ansprüche 1 bis 6 auszuführen.

## Revendications

1. Procédé de correction de densité d'image, appliqué à un dispositif de formation d'image (120), comprenant :
la formation, en réponse à une instruction de correction de densité d'image déclenchée par un utilisateur, d'un motif de densité d'image destiné à la correction de densité ;
la collecte de données de densité d'image correspondant au motif de densité d'image ;
la génération de données de courbe de reproduction des tons (TRC) selon les données de densité d'image correspondant au motif de densité d'image ; et
l'envoi des données TRC à un dispositif de commande (900), le dispositif de commande (900) étant configuré pour corriger la densité d'image sur la base des données TRC pendant le processus de formation d'image ; **caractérisé en ce que**
l'étape d'envoi des données TRC au dispositif de commande (900) comprend :
la détermination, par le dispositif de formation d'image (120), s'il faut établir une connexion de communication avec le dispositif de commande (900) ; et
si le dispositif de formation d'image (120) établit une connexion de communication avec le dispositif de commande (900), les données TRC sont envoyées au dispositif de commande (900) ; et
si le dispositif de formation d'image (120) n'établit pas de connexion de communication avec le dispositif de commande (900), les données TRC sont enregistrées localement, et après que le dispositif de formation d'image (120) a établi une connexion de communication avec le dispositif de commande (900), les données TRC sont envoyées au dispositif de commande (900)

2. Le procédé selon la revendication 1, dans lequel ledit envoi des données TRC au dispositif de commande (900) comprend :
l'envoi, lorsque le dispositif de formation d'image (120) a établi une connexion de communication avec le dispositif de commande (900), des données TRC au dispositif de commande (900).

3. Le procédé selon la revendication 1, dans lequel ledit envoi des données TRC au dispositif de commande (900) comprend :
la réception d'une instruction d'acquisition de données TRC envoyée par le dispositif de commande (900), ladite instruction étant configurée pour commander au dispositif de formation d'image (120) d'envoyer les données TRC au dispositif de commande (900) ; et
l'envoi des données TRC au dispositif de commande (900).

4. Le procédé selon la revendication 1, dans lequel ledit envoi des données TRC au dispositif de commande (900) comprend :
l'envoi des données TRC respectivement à au moins deux dispositifs de commande (900).

5. Le procédé selon la revendication 1, dans lequel le motif de densité d'image comprend : un motif de densité d'image jaune Y, un motif de densité d'image magenta M, un motif de densité d'image cyan C et un motif de densité d'image noir K.

6. Le procédé selon la revendication 1, comprenant en outre :
la sortie d'informations d'invite de correction de densité d'image, lesdites informations étant configurées pour inviter l'utilisateur à déclencher l'instruction de correction de densité d'image.

7. Dispositif de formation d'image (120), comprenant :
au moins un processeur ; et
une mémoire configurée pour stocker des instructions exécutables par ledit processeur ;
les instructions amenant ledit processeur à :
former un motif de densité d'image destiné à la correction de densité ;
collecter des données de densité d'image correspondant au motif de densité d'image ;
générer des données TRC selon les données de densité d'image correspondant au motif de densité d'image ;
envoyer les données TRC à un dispositif de commande (900), ledit dispositif de commande (900) étant configuré pour corriger la densité d'image sur la base des données TRC pendant le processus de formation d'image ;
**caractérisé en ce que** le processeur est configuré pour :
exécuter l'étape d'envoi des données TRC au dispositif de commande (900), ladite étape comprenant :
la détermination de l'opportunité d'établir une connexion de communication avec le dispositif de commande (900) ; et
si le dispositif de formation d'image (120) établit une connexion de communication avec le dispositif de commande (900), les données TRC sont envoyées audit dispositif de commande (900) ; et
si le dispositif de formation d'image (120) n'établit pas de connexion de communication avec le dispositif de commande (900), les données TRC sont enregistrées localement, et après que le dispositif de formation d'image (120) a établi une connexion de communication avec le dispositif de commande (900), les données TRC sont envoyées au dispositif de commande (900).

8. Le dispositif de formation d'image (120) selon la revendication 7, dans lequel le processeur est en outre configuré pour :
envoyer, lorsque le dispositif de formation d'image (120) a établi une connexion de communication avec le dispositif de commande (900), les données TRC au dispositif de commande (900).

9. Le dispositif de formation d'image (120) selon la revendication 7, dans lequel le processeur est en outre configuré pour :
recevoir une instruction d'acquisition de données TRC envoyée par le dispositif de commande (900), ladite instruction étant configurée pour commander au dispositif de formation d'image (120) d'envoyer les données TRC au dispositif de commande (900) ; et
envoyer les données TRC au dispositif de commande (900).

10. Le dispositif de formation d'image (120) selon la revendication 7, dans lequel le processeur est en outre configuré pour :
envoyer les données TRC respectivement à au moins deux dispositifs de commande (900).

11. Le dispositif de formation d'image (120) selon la revendication 7, dans lequel le motif de densité d'image comprend : un motif de densité d'image jaune Y, un motif de densité d'image magenta M, un motif de densité d'image cyan C et un motif de densité d'image noir K.

12. Le dispositif de formation d'image (120) selon la revendication 7, dans lequel le processeur est en outre configuré pour :
émettre des informations d'invite de correction de densité d'image, lesdites informations étant configurées pour inviter l'utilisateur à déclencher l'instruction de correction de densité d'image.

13. Support de stockage lisible par ordinateur non transitoire, ledit support stockant des instructions de programme informatique, lesdites instructions, lorsqu'elles sont exécutées par un processeur, étant configurées pour exécuter le procédé de correction de densité d'image selon l'une quelconque des revendications 1 à 6.
